# EUROPEAN PATENT SPECIFICATION

(11) **EP 1 324 893 B1**
(45) Date of publication and mention of the grant of the patent: **29.06.2005**
(21) Application number: 01970465.9
(22) Date of filing: 25.09.2001
(51) Int. Cl.: B60K 6/02, H02K 16/00

(54) **A HYBRID PROPULSION SYSTEM FOR A MOTOR VEHICLE**
HYBRIDANTRIEBSSYSTEM FÜR EIN KRAFTFAHRZEUG
SYSTEME DE PROPULSION HYBRIDE POUR UN VEHICULE AUTOMOBILE

(30) Priority: 02.10.2000 SE 0003572
(43) Date of publication of application: 09.07.2003
(73) Proprietor: Volvo Lastvagnar AB, 405 03 Göteborg (SE)
(72) Inventor: WILMORE, Melvyn, B-9070 Heusden (BE)
(74) Representative: Fröhling, Werner
(86) International application number: PCT/SE2001/002072
(87) International publication number: WO 2002/028674

(56) References cited:
- EP-A2- 0 743 216
- EP-A2- 1 102 385
- WO-A1-00/34066
- WO-A1-97/09191
- WO-A1-99/22955

## Description

### TECHNICAL FIELD

The present invention relates to an integrated starter generator apparatus for producing electrical power and/or rotational torque, said apparatus including a primary rotor arranged for cooperation with a primary stator, and a secondary rotor arranged for cooperation with a secondary stator. The invention also relates to a propulsion system for a motor vehicle including the integrated starter generator apparatus.

### BACKGROUND OF THE INVENTION

On a parallel hybrid road vehicle using an internal combustion engine (ICE) and, for example, an integrated starter generator (ISG), it can be desirable to be able to disconnect the ICE from the ISG in order to drive the vehicle using electrical power only. Thus, it must be possible to stop the ICE. Then drive using the ISG as a traction motor and when needed be able to restart the ICE and reconnect power transmission.

WO 99/22955 discloses a hybrid propulsion system for a motor vehicle provided with an integrated starter generator apparatus. This apparatus includes a single stator - rotor unit and two independently controllable, axially arranged clutches.

This and other types of prior art integrated starter generator apparatuses increases the length of the propulsion system, especially when a large electrical power capacity is needed.

WO 0034066 discloses a hybrid drive device comprising two rotors and only one stator, according to the preamble of claim 1.

### SUMMARY OF THE INVENTION

What is needed is therefore an integrated starter generator apparatus having a large electrical power capacity as well as being longitudinally compact.

For this object, the integrated starter generator apparatus according to the invention is characterized by the features of claim 1.

According to an advantageous embodiment of the invention, the clutch and the primary and secondary rotors are concentrically arranged at a common axis of rotation.

### BRIEF DESCRIPTION OF THE DRAWINGS

The invention will be further described in the following, in a non-limiting way with reference to the accompanying drawings in which:
FIG 1 is a schematic view showing the propulsion system according to the invention,
FIG 2 is an exploded perspective view of the propulsion system according to Fig. 1, and
FIG 3 is an exploded perspective view of the integrated starter generator apparatus according to the invention.

### DETAILED DESCRIPTION OF THE INVENTION

The integrated starter generator apparatus according to the invention enables the automatic connection and disconnection of the power transmission between an internal combustion engine and the alternative drive machine in a hybrid road vehicle.

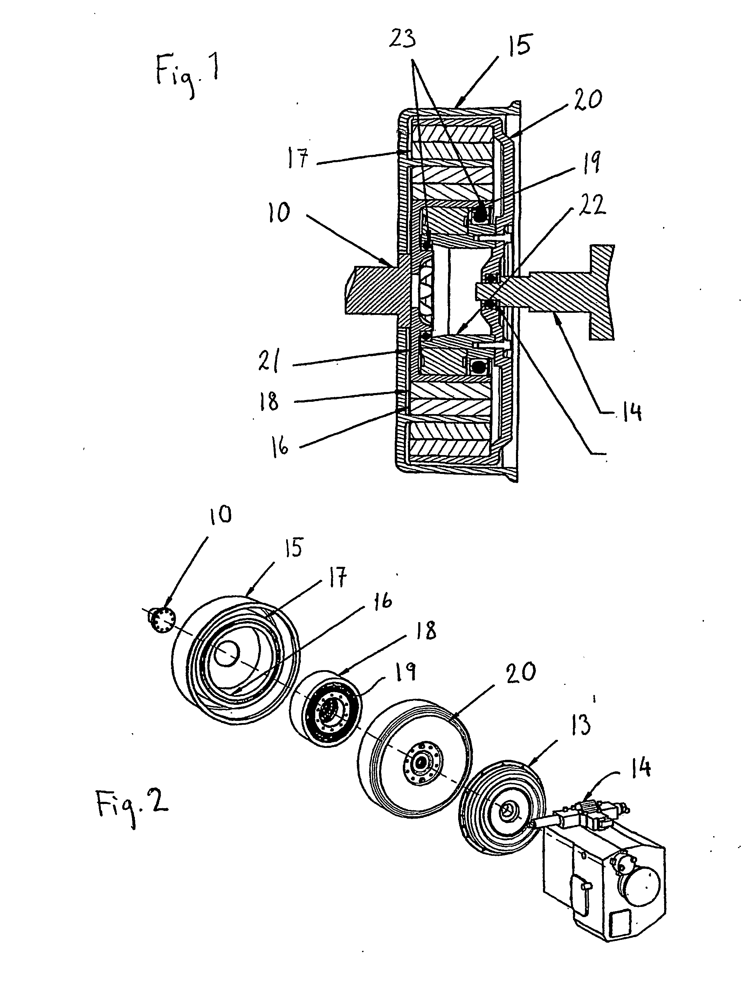

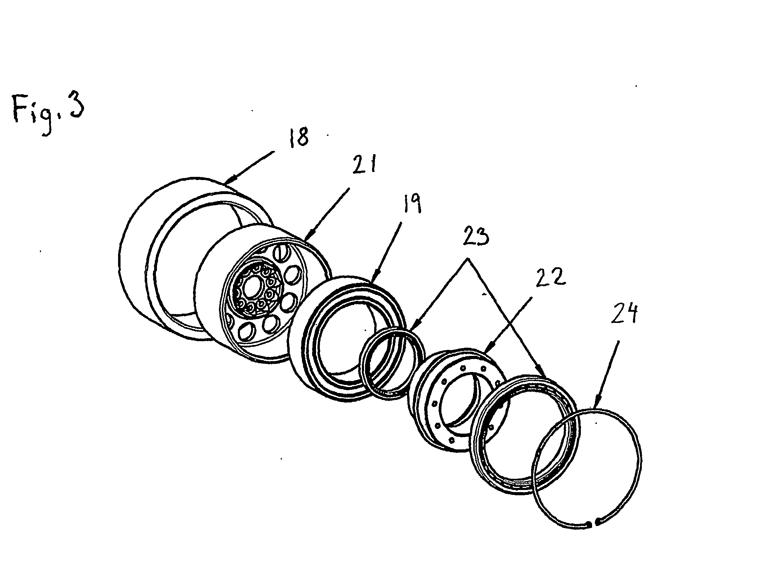

Fig. 1 and 2 shows the major components of a preferred embodiment of the inventive apparatus and propulsion system. The output shaft 10 of an internal combustion engine is connected via an integrated starter generator apparatus 12 and a clutch 13 to a gearbox 14.

A housing 15 comprises a primary stator 16 and a secondary stator 17. A primary rotor 18 is adapted to be mounted on the shaft 10 for rotation inside the primary stator 16. The primary rotor 18 is provided with a centrally arranged one-way clutch 19. A secondary rotor 20 is adapted to be mounted on the clutch 19. The secondary rotor 20 forms the attachment point for the clutch 13 which is used as a conventional clutch when selecting different gears in the gearbox 14 for driving at different speeds.

Fig. 3 is an exploded view of the primary rotor 18 with one-way clutch 19. The clutch 19 is mounted inside a cylindrical flywheel mass 21 with a clutch core 22 riding on bearings 23 and the clutch assembly is locked inside the flywheel by means a circlip 24.

Below is a description of the major basic modes for a hybrid vehicle using the propulsion system according to the invention, but there are, of course, other modes not included here.

### Internal combustion engine (ICE) start mode

The internal combustion engine can be started by energising the primary integrated starter generator (ISG) stator 16.

### Conventional ICE drive mode

When the ICE is running, the one-way roller clutch 19 locks the drive so that the engine flywheel and the secondary ISG rotor 20 rotate together. This enables the full electrical power to be generated by the ISG.

### Electric Vehicle (EV) mode

The ICE can be stopped. The secondary ISG stator 17 can be energised and EV drive is enabled by the secondary rotor. In this mode the one-way roller clutch 19 unlocks, disconnecting the drive between the ICE and secondary ISG rotor 20. This mode can also be used for a creep function in very dense or slow moving traffic.

### Vehicle coasting mode

When coasting or going downhill and the throttle is released the ICE will go to idle and the one-way clutch will unlock and become a free-wheel. In this mode the primary ISG continues to generate power at a low level, and the secondary ISG can either be used as a retarder if the vehicle speed must be reduced, or as a means of recuperating some of the vehicles energy.

In general, the invention provides the following functionality. Normally required flywheel effect is maintained even when drive connection is separated. Adequate mechanical support and location is maintained for ISG rotor when drive is disconnected. Coupling/decoupling can occur completely automatically. Coupling/decoupling device may be maintenance free. ICE restarts is possible by energising part of ISG stator without having any effect on the electrical drive.

The invention is not limited to the above-described embodiments, but several modifications are possible within the scope of the following claims.

## Claims

1. An integrated starter generator apparatus (12) for producing electrical power and/or rotational torque, said apparatus including a primary rotor (18) arranged for cooperation with a primary stator (16), and a secondary rotor (20),
**characterized in that** the secondary rotor (20) is arranged for cooperation with a secondary stator (17), and that a one-way clutch (19) is disposed between the primary rotor (18) and the secondary rotor (20).

2. An apparatus according to claim 1,
**characterized in**
**that** the clutch (19) and the primary and secondary rotors (18, 20) are concentrically arranged at a common axis of rotation.

3. An apparatus according to claim 2,
**characterized in that** one of the rotors (18; 20) is adapted to be connected to the output shaft (10) of an engine.

4. An apparatus according to claim 3,
**characterized in that** the other rotor (18; 20) is adapted to be connected to a vehicle transmission (14).

5. A propulsion system for a motor vehicle, including an internal combustion engine and a multi-gear transmission (14), wherein the engine and the transmission are interconnected via an integrated starter generator apparatus (12) according to claim 1.

## Patentansprüche

1. Integrierte Anlasser-Generator-Vorrichtung (12) zur Erzeugung einer elektrischen Leistung und/oder eines Drehmoments, wobei die Vorrichtung einen für eine Zusammenwirkung mit einem Primärstator (16) angeordneten Primärrotor (18) und einen Sekundärrotor (20) aufweist, **dadurch gekennzeichnet, dass** der Sekundärrotor (20) für eine Zusammenwirkung mit einem Sekundärstator (17) angeordnet ist und dass eine Einwegkupplung (19) zwischen dem Primärrotor (18) und dem Sekundärrotor (20) angeordnet ist.

2. Vorrichtung nach Anspruch 1, **dadurch gekennzeichnet, dass** die Kupplung (19) und der Primär- und der Sekundärrotor (18, 20) konzentrisch an einer gemeinsamen Drehachse angeordnet sind.

3. Vorrichtung nach Anspruch 2, **dadurch gekennzeichnet, dass** einer der Rotoren (18; 20) mit der Ausgangswelle (10) eines Motors verbunden werden kann.

4. Vorrichtung nach Anspruch 3, **dadurch gekennzeichnet, dass** der andere Rotor (18; 20) mit einem Fahrzeuggetriebe (14) verbunden werden kann.

5. Antriebssystem für ein Kraftfahrzeug mit einer Verbrennungskraftmaschine und einem Mehrganggetriebe (14), wobei der Motor und das Getriebe über eine integrierte Anlasser-Generator-Vorrichtung (12) nach Anspruch 1 miteinander verbunden sind.

## Revendications

1. Dispositif générateur à démarreur intégré (12) pour produire un courant électrique et/ou un couple de rotation, ledit dispositif incluant un rotor primaire (18) agencé pour une coopération avec un stator primaire (16), et un rotor secondaire (20), **caractérisé en ce que** le rotor secondaire (20) est agencé pour une coopération avec un stator secondaire (17) et **en ce qu'**une roue libre (19) est disposée entre le rotor primaire (18) et le rotor secondaire (20).

2. Dispositif selon la revendication 1, **caractérisé en ce que** la roue (19) et les rotors primaire et secondaire (18 ; 20) sont agencés de manière concentrique sur un axe de rotation commun.

3. Dispositif selon la revendication 2, **caractérisé en ce que** l'un des rotors (18 ; 20) est adapté pour être relié à l'arbre de sortie (10) d'un moteur.

4. Dispositif selon la revendication 3, **caractérisé en ce que** l'autre rotor (18 ; 20) est adapté pour être relié à une transmission de véhicule (14).

5. Système de propulsion pour un véhicule à moteur, incluant un moteur à combustion interne et une transmission à engrenages multiples (14), dans lequel le moteur et la transmission sont mutuellement reliés par l'intermédiaire d'un dispositif générateur à démarreur intégré (12) selon la revendication 1.
